# DEMANDE DE BREVET EUROPEEN

(11) **EP 2 080 680 A1**
(43) Date de publication de la demande: **22.07.2009**
(21) Numéro de dépôt: 09150274.0
(22) Date de dépôt: 09.01.2009
(51) Int. Cl.: B60S 1/40

(54) **Système d'assemblage d'une plateforme de connexion et d'un connecteur de liaison d'un système d'essuyage pour véhicule automobile**

(30) Priorité: 17.01.2008 FR 0800247
(71) Demandeur: VALEO SYSTEMES D'ESSUYAGE, 78321 La Verrière (FR)
(72) Inventeur: Espinasse, Philippe, 63114 COUDES (FR); Grasso, Giuseppe, 63340, Le Breuil sur Couze (FR)
(74) Mandataire: Rosolen-Delarue, Katell

(57) **Abrégé**

Système d'assemblage de deux éléments de raccordement constitués d'une plateforme (10') de connexion d'un balai d'essuie-glace pour véhicule automobile et d'un connecteur (20') de liaison dudit balai d'essuie-glace à un bras d'actionnement.

Selon l'invention, lesdits éléments comportent, d'une part, des moyens (11'a, 11'b, 12'a, 12'b, 21'a, 22'a) d'insertion, dans une direction (I) d'insertion donnée, d'un élément dans l'autre élément, et, d'autre part, des moyens (28a, 29a) de verrouillage d'un élément sur l'autre élément dans une direction (V) de verrouillage perpendiculaire à la direction (I) d'insertion, et des moyens (23a, 24a) de blocage, après verrouillage, d'un élément par rapport à l'autre dans la direction (I) d'insertion.

Application aux systèmes d'essuyage pour véhicules automobiles.

## Description

La présente invention concerne un système d'assemblage de deux éléments de raccordement constitués d'une plateforme de connexion d'un balai d'essuie-glace pour véhicule automobile et d'un connecteur de liaison dudit balai d'essuie-glace à un bras d'actionnement. Elle concerne également une plateforme de connexion, un balai d'essuie-glace comprenant ladite plateforme de connexion, et un connecteur de liaison.

L'invention trouve une application particulièrement avantageuse, mais non exclusive, dans le domaine des systèmes d'essuyage pour véhicules automobiles.

Actuellement, la majorité des balais d'essuie-glace utilisés sont des balais dits classiques, comportant une structure à palonniers.

Ce type de balai d'essuie-glace est peu à peu remplacé par une nouvelle génération de balais, dits « plats » encore appelés « Flat Blades », qui présentent la particularité de ne plus comporter de structure à palonniers. Les balais d'essuie-glace plats comprennent toujours une lame d'essuyage souple, mais avec la différence que l'armature externe chargée de la supporter est ici remplacée par une structure flexible directement intégrée à la lame.

Par ailleurs, de même que pour les systèmes d'essuyage à balais classiques connus de l'état de la technique, les systèmes à balais plats comportent des éléments de raccordement du balai lui-même à des bras d'actionnement de forme appropriée, aptes à transmettre auxdits balais le mouvement de balayage produit par un moteur d'entraînement. On rappellera à cet égard qu'il existe toutes sortes de bras d'actionnement, comme les bras crochets, les bras à axe de pivotement latéral, les bras à clippage longitudinal, etc.

Ces éléments de raccordement comprennent, d'une part, une plateforme de connexion ménagée sur la lame d'essuyage, et, d'autre part, un connecteur de liaison de la plateforme au bras d'actionnement. Ces deux éléments de raccordement sont destinés à être assemblés l'un à l'autre par un système d'assemblage dans lequel les éléments de raccordement comportent des moyens d'insertion l'un dans l'autre et des moyens de verrouillage de l'un sur l'autre. Le connecteur comporte en outre des moyens de liaison permettant son raccordement au bras d'actionnement.

On comprend dans ces conditions qu'aujourd'hui les systèmes d'essuyage à balais d'essuie-glace plats ne sont pas standardisés, notamment au niveau des systèmes d'assemblage chargés d'assurer leur montage. Il en résulte un grand nombre de connecteurs sur le marché qui doivent intégrer des moyens d'insertion et des moyens de verrouillage spécifiques tenant compte de tous les types de plateforme de connexion existants et des moyens de liaison pour tous les types de bras d'actionnement existants.

Cette multiplication des références au stade de la production et/ou de la distribution se traduit par un coût significatif. C'est pourquoi, faute de standardisation, le prix des balais d'essuie-glace plats reste trop élevé.

Pour tenter de remédier à cette situation, il a été proposé dans la demande internationale W02006/069648 une plateforme de connexion unique capable de recevoir sur une même face des connecteurs adaptés à divers types de bras d'actionnement. Plus spécialement, la plateforme de connexion décrite dans ce document comporte, d'une part, une butée pour l'assemblage de la plateforme à une extrémité du connecteur, et, d'autre part, un bec de clippage par déformation réversible élastique pour le verrouillage de la plateforme à l'autre extrémité du connecteur.

Dans ce système d'essuyage connu, l'assemblage de la plateforme de connexion et du connecteur de liaison est effectué par l'utilisateur en deux mouvements successifs, à savoir un premier mouvement d'insertion pour amener une extrémité du connecteur contre la butée de la plateforme, puis un deuxième mouvement d'insertion et de verrouillage par pivotement du connecteur autour de la butée de manière à engager l'autre extrémité du connecteur dans le bec de clippage.

Pourtant, ce système d'assemblage connu, comme d'autres systèmes équivalents mettant en oeuvre un verrouillage par déformation élastique réversible, présente l'inconvénient d'être vulnérable à des efforts extérieurs qui seraient appliqués dans un sens contraire à celui ayant permis l'insertion et le verrouillage des éléments de raccordement l'un sur l'autre, et ainsi de provoquer un désassemblage des éléments. On comprend en effet que si l'insertion desdits éléments et leur verrouillage ont pu être obtenus en exerçant une action de déformation élastique réversible dans une direction donnée, une action inverse dans la même direction est susceptible de provoquer le déverrouillage et le désassemblage de ces mêmes éléments. C'est le cas en particulier si la force de déformation élastique nécessaire à l'insertion et au verrouillage est choisie relativement faible afin d'obtenir un verrouillage facile, puisqu'une force opposée, également faible, serait alors en mesure de déverrouiller et désassembler les éléments.

Aussi, un but de l'invention est de proposer un système d'assemblage de deux éléments de raccordement constitués d'une plateforme de connexion d'un balai d'essuie-glace pour véhicule automobile et d'un connecteur de liaison dudit balai d'essuie-glace à un bras d'actionnement, qui permettrait d'assurer une très bonne tenue de ces éléments l'un sur l'autre après insertion et verrouillage, notamment à l'encontre d'efforts mécaniques qui seraient exercés dans la direction d'insertion et qui auraient pour effet de déverrouiller et désassembler lesdits éléments de raccordement l'un par rapport à l'autre.

Ce but est atteint, conformément à l'invention, du fait que lesdits éléments comportent, d'une part, des moyens d'insertion, dans une direction d'insertion donnée, d'un élément dans l'autre élément, et, d'autre part, des moyens de verrouillage d'un élément sur l'autre élément dans une direction de verrouillage perpendiculaire à la direction d'insertion, et des moyens de blocage, après verrouillage, d'un élément par rapport à l'autre dans la direction d'insertion.

Ainsi, comme on le verra en détail plus loin, le système d'assemblage conforme à l'invention propose, dans un premier temps, d'insérer les deux éléments de raccordement l'un dans l'autre selon un mouvement d'insertion effectué dans une direction donnée. Puis, dans un deuxième temps, un autre mouvement, effectué dans une direction de verrouillage perpendiculaire à la direction d'insertion, a le double effet de verrouiller les éléments l'un sur l'autre dans la direction de verrouillage et de les bloquer dans la direction d'insertion. Dans ces conditions, il apparaît clairement qu'un effort extérieur appliqué aux éléments de raccordement dans la direction d'insertion après verrouillage et qui aurait pour effet de désassembler les deux éléments demeure sans effet, conformément au but poursuivi par l'invention.

Avantageusement, l'invention prévoit que lesdits moyens de verrouillage sont des moyens de verrouillage par déformation élastique réversible.

Selon un mode de réalisation, lesdits moyens d'insertion comprennent au moins un plot porté par un élément et au moins une ouverture pratiquée sur l'autre élément, apte à recevoir ledit plot.

Dans ce cas, il est prévu par l'invention que lesdits moyens de blocage comprennent au moins une paroi de blocage apte à bloquer, après verrouillage, ledit plot dans la direction d'insertion.

De même, l'invention propose que lesdits moyens de verrouillage par déformation élastique réversible présentent une butée de verrouillage d'un élément sur l'autre élément et une pente destinée à dégager élastiquement ladite butée lors du verrouillage dudit élément dans la direction de verrouillage.

Plus particulièrement, ladite butée de verrouillage ménagée sur un élément est apte à bloquer ledit plot de l'autre élément dans la direction de verrouillage.

Selon un autre mode de réalisation, lesdits moyens de verrouillage par déformation élastique réversible et lesdits moyens de blocage sont constitués par une fourche comprenant un bras élastique de verrouillage et de blocage d'un élément sur l'autre élément et une pente destinée à ouvrir ledit bras élastique lors du verrouillage dudit élément dans la direction de verrouillage.

Dans ce cas, ledit bras élastique ménagé sur un élément est apte à verrouiller ledit plot de l'autre élément dans la direction de verrouillage.

Avantageusement, ladite fourche est contiguë à ladite ouverture.

L'invention concerne également une plateforme de connexion d'un balai d'essuie-glace pour véhicule automobile constituant un élément de raccordement du système d'assemblage selon l'invention.

L'invention concerne en outre un balai d'essuie-glace, remarquable en ce qu'il comprend une plateforme de connexion selon l'invention.

L'invention concerne enfin un connecteur de liaison d'un balai d'essuie-glace à un bras d'actionnement constituant un élément de raccordement du système d'assemblage selon l'invention.

La description qui va suivre en regard des dessins annexés, donnés à titre d'exemples non limitatifs, fera bien comprendre en quoi consiste l'invention et comment elle peut être réalisée.

La figure 1a est une vue de dessus d'une plateforme de connexion d'un premier mode de réalisation d'un système d'assemblage conforme à l'invention.

La figure 1b est une vue en coupe selon l'axe A-A de la plateforme de connexion de la figure 1a.

Les figures 2a à 2c sont de vues de côté illustrant les étapes de l'assemblage d'un connecteur de liaison sur la plateforme de connexion des figures 1a et 1 b.

La figure 3a est une vue en perspective d'une plateforme de connexion d'un deuxième mode de réalisation d'un système d'assemblage conforme à l'invention.

La figure 3b est une vue en perspective d'un connecteur de liaison destiné à être assemblé à la plateforme de connexion de la figure 3a.

Les figures 4a à 4c sont des vues en perspective illustrant les étapes de l'assemblage du connecteur de liaison de la figure 3a sur la plateforme de connexion de la figure 3b.

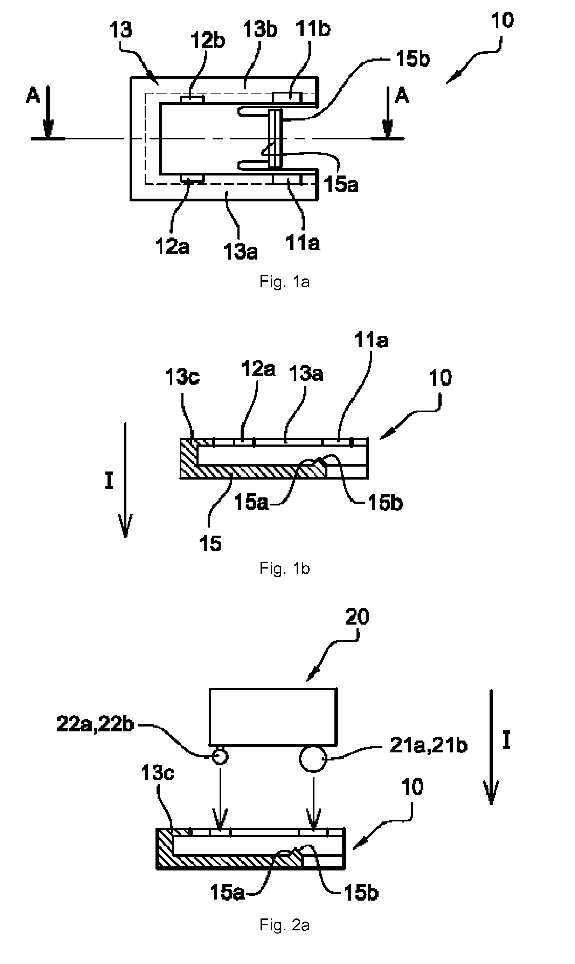

Sur les figures 1a et 1b est représentée une plateforme 10 de connexion d'un balai d'essuie-glace pour véhicule automobile, laquelle constitue avec le connecteur 20 de liaison montré sur les figures 2a à 2c des éléments de raccordement d'une lame d'essuyage, non représentée, portée par la plateforme 10 à un bras d'actionnement, non représenté, d'un système d'essuyage utilisant notamment des balais plats.

La plateforme 10 de connexion et le connecteur 20 de liaison sont destinés à être assemblés l'un sur l'autre à l'aide d'un système d'assemblage qui va maintenant être décrit en détail.

Comme le montrent les figures 1a et 1b, la plateforme 10 comporte des ouvertures latérales 11a, 11 b, 12a, 12b ménagées à travers une paroi 13 disposée sur trois côtés, le long du pourtour rectangulaire de la plateforme 10.

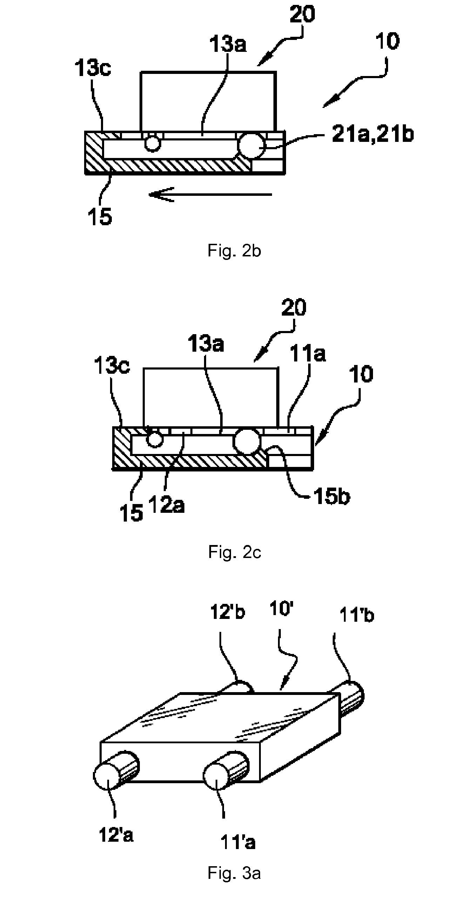

Ces ouvertures latérales forment avec des plots latéraux cylindriques 21a, 21b, 22a, 22b portés par le connecteur 20 des figures 2a à 2c des moyens d'insertion du connecteur dans la plateforme 10 selon une direction d'insertion représentée par la flèche I sur les figures 1b et 2a. Comme on peut le voir sur la figure 2a, pour insérer le connecteur 20 dans la plateforme 10, il suffit de placer les plots cylindriques 21 a, 21 b, 22a, 22b du connecteur 20 en regard des ouvertures 11a, 11b, 12a, 12b correspondantes de la plateforme 10 et d'introduire les plots à travers les ouvertures en déplaçant le connecteur 20 dans une direction parallèle à la direction I d'insertion. Bien entendu, on pourrait tout aussi bien déplacer la plateforme 10 vers le connecteur 10 dans un mouvement en sens contraire mais toujours parallèle à la direction I d'insertion. La figure 2b montre le connecteur 20 en position insérée dans la plateforme 10.

Après insertion dans la plateforme 10, le connecteur 20 est amené en position verrouillée au moyen d'un mouvement de translation parallèle à une direction de verrouillage indiquée par la flèche V de la figure 2b. Dans cette position, illustrée sur la figure 2c, le connecteur 20 se trouve bloqué dans la direction I d'insertion du fait qu'après verrouillage les plots cylindriques 21 a, 21 b, 22a, 22b du connecteur sont disposés sous les parties latérales 13a, 13b de la paroi 13, lesquelles empêchent tout mouvement dans la direction I qui aurait pour effet de dégager le connecteur 20 hors de la plateforme 10.

Par ailleurs, le connecteur 20 est maintenu verrouillé dans la direction V grâce à des moyens de verrouillage par déformation élastique réversible comprenant une butée 15a de verrouillage et une pente 15b portées par une extrémité d'une lame élastique 15 découpée dans une paroi constituant le fond de la plateforme 10. Lors du verrouillage du connecteur 20, l'effort exercé par les plots cylindriques 21 a, 21 b du connecteur sur la pente 15b dégage par flexion élastique la butée 15a de manière à permettre le mouvement de translation du connecteur dans la direction V de verrouillage. Puis, lorsque les plots 21a, 21b du connecteur 20 ont totalement dépassé la butée 15a, celle-ci est ramenée élastiquement dans sa position de verrouillage. Les plots cylindriques 21 a, 21 b se trouvent alors empêchés par la butée 15a d'effectuer tout mouvement dans la direction V susceptible de faire sortir le connecteur 20 de la plateforme 10. Le connecteur 20 peut être parfaitement maintenu en position verrouillée si, dans cette position, le connecteur vient en butée contre la partie frontale 13c de la paroi 13, comme représenté sur la figure 2c.

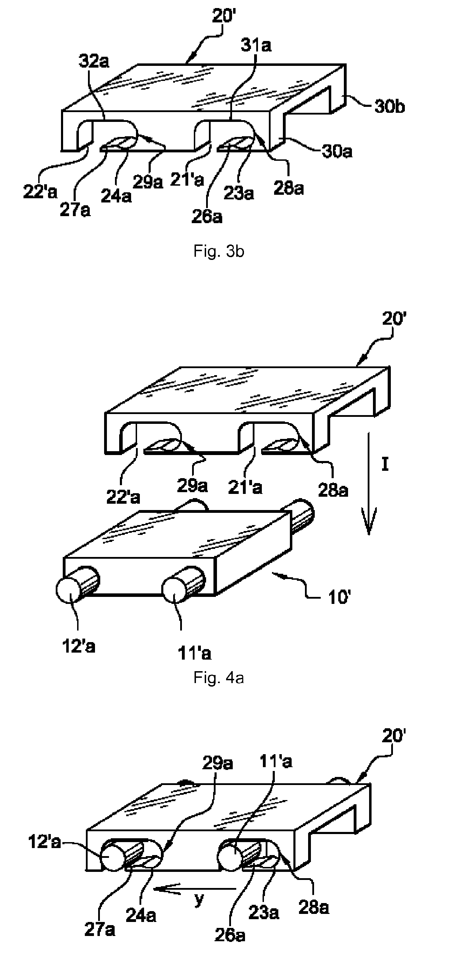

Les figures 3a, 3b et 4a à 4c illustrent un deuxième système d'assemblage d'une plateforme 10' et d'un connecteur 20'.

La plateforme 10' de connexion de la figure 3b est insérée dans le connecteur 20' de liaison de la figure 3a au moyen de plots latéraux cylindriques 11'a, 11'b, 12'a, 12'b destinés à être introduits dans le connecteur 20' à travers des ouvertures telles que 21'a et 22'a, pratiquées dans des parois latérales 30a, 30b du connecteur.

L'insertion de la plateforme dans le connecteur est effectuée en présentant le connecteur 20' en face de la plateforme 10' de manière à disposer les ouvertures telles que 21'a et 22'a en regard des plots cylindriques 11'a, 11'b, 12'a, 12'b correspondants, comme l'indique la figure 4a, puis en déplaçant le connecteur 20' vers la plateforme 10' selon un mouvement parallèle à la direction I d'insertion représentée sur la figure 4a. Dans ce mouvement, les plots cylindriques de la plateforme 10' pénètrent dans les ouvertures du connecteur 20', la plateforme et le connecteur se trouvant alors dans la position représentée sur la figure 4b. Il convient de remarquer que le même résultat pourrait être obtenu en déplaçant la plateforme par rapport au connecteur dans un mouvement en sens inverse mais de même direction I.

A partir de la position d'insertion de la figure 4b, la plateforme 10' est verrouillée sur le connecteur 20' en déplaçant ce dernier dans une direction V de verrouillage qui a pour effet d'engager les plots cylindriques de la plateforme 10' dans des moyens de verrouillage par déformation élastique constitués par des fourches 28a, 29a contiguës aux ouvertures 21'a, 22'a du connecteur 20'. Les fourches 28a, 29a comprennent un bras élastique 23a, 24a et une pente 26a, 27a destinée à permettre l'ouverture des bras élastiques par les plots correspondants de la plateforme 10' au cours du verrouillage de la plateforme 10' sur le connecteur 20'. Lorsque, dans le mouvement de verrouillage parallèlement à la direction V, les plots cylindriques 11'a, 12'a ont dépassé la pente 26a, 27a, les bras élastiques 23a, 24a reprennent leur position initiale dans laquelle les plots cylindriques se trouvent enserrés par les bras et donc verrouillés à l'encontre d'un mouvement dans la direction V de verrouillage qui aurait pour effet de les dégager hors des bras élastiques.

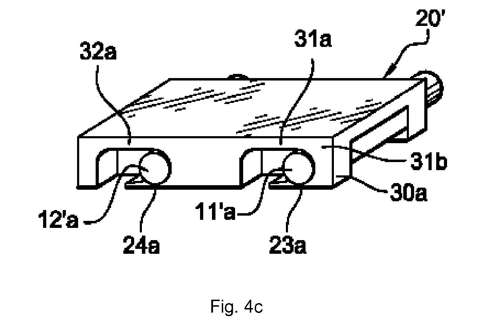

D'autre part, on observe que dans la position de verrouillage de la figure 4c, les fourches 28a, 29a bloquent également les plots cylindriques tels que 11'a, 12'a dans la direction I d'insertion, ceci au moyen de bras 31a, 32a, opposés aux bras élastiques 23a, 24a, formés par des éléments de la paroi latérale 30a du connecteur 20'. Tout mouvement de dégagement de la plateforme 10' dans la direction I d'insertion est alors totalement interdit.

## Revendications

1. Système d'assemblage de deux éléments de raccordement constitués d'une plateforme (10 ; 10') de connexion d'un balai d'essuie-glace pour véhicule automobile et d'un connecteur (20 ; 20') de liaison dudit balai d'essuie-glace à un bras d'actionnement, **caractérisé en ce que** lesdits éléments comportent, d'une part, des moyens (11a, 11b, 12a, 12b; 11'a, 11'b, 12'a, 12'b, 21a, 21 b, 22a, 22b ; 21'a, 22'a) d'insertion, dans une direction (I) d'insertion donnée, d'un élément dans l'autre élément, et, d'autre part, des moyens (15a ; 28a, 29a) de verrouillage d'un élément sur l'autre élément dans une direction (V) de verrouillage perpendiculaire à la direction (I) d'insertion, et des moyens (13 ; 23a, 24a) de blocage, après verrouillage, d'un élément par rapport à l'autre dans la direction (I) d'insertion.

2. Système selon la revendication 1, dans lequel lesdits moyens de verrouillage sont des moyens (15a ; 28a, 29a) de verrouillage par déformation élastique réversible.

3. Système selon l'une des revendications 1 ou 2, dans lequel lesdits moyens d'insertion comprennent au moins un plot (21a, 21b, 22a, 22b ; 11'a, 11'b, 12'a, 12'b) porté par un élément (20 ; 10') et au moins une ouverture (11a, 11b, 12a, 12b ; 21'a, 22'a) pratiquée sur l'autre élément (10 ; 20'), apte à recevoir ledit plot.

4. Système selon la revendication 3, dans lequel lesdits moyens de blocage comprennent au moins une paroi (13) de blocage apte à bloquer, après verrouillage, ledit plot (21 a, 21 b, 22a, 22b) dans la direction (I) d'insertion.

5. Système selon l'une quelconque des revendication 2 à 4, dans lequel lesdits moyens de verrouillage par déformation élastique réversible présentent une butée (15a) de verrouillage d'un élément (20) sur l'autre élément (10) et une pente (15b) destinée à dégager élastiquement ladite butée (15a) lors du verrouillage dudit élément (20) dans la direction (V) de verrouillage.

6. Système selon les revendications 3 et 5, dans lequel ladite butée (15a) de verrouillage ménagée sur un élément (10) est apte à bloquer ledit plot (21a, 21 b, 22a, 22b) de l'autre élément (20) dans la direction (V) de verrouillage.

7. Système selon l'une des revendications 5 ou 6, dans lequel ladite butée (15a) de verrouillage et ladite pente (15b) sont portées par une lame élastique (15) découpée dans une paroi d'un élément (10), sensiblement perpendiculaire à la direction (I) d'insertion.

8. Système selon la revendication 2, dans lequel lesdits moyens de verrouillage par déformation élastique réversible et lesdits moyens de blocage sont constitués par une fourche (28a, 29a) comprenant un bras élastique (23a, 24a) de verrouillage et de blocage d'un élément (10') sur l'autre élément (20') et une pente (26a, 27a) destinée à ouvrir ledit bras élastique (23a, 24a) lors du verrouillage dudit élément (10') dans la direction (V) de verrouillage.

9. Système selon les revendications 3 et 8, dans lequel ledit bras élastique (23a, 24a) ménagé sur un élément (20') est apte à verrouiller ledit plot (11'a, 12'a) de l'autre élément (10') dans la direction (V) de verrouillage.

10. Système selon l'une des revendications 8 ou 9, dans lequel ladite fourche (28a, 29a) est contiguë à ladite ouverture (21'a, 22'a).

11. Plateforme (10 ; 10') de connexion d'un balai d'essuie-glace pour véhicule automobile constituant un élément de raccordement du système d'assemblage selon l'une quelconque des revendications 1 à 10.

12. Balai d'essuie-glace, **caractérisé en ce qu'**il comprend une plateforme (10, 10') de connexion selon la revendication 11.

13. Connecteur (20 ; 20') de liaison d'un balai d'essuie-glace à un bras d'actionnement constituant un élément de raccordement du système d'assemblage selon l'une quelconque des revendications 1 à 10.
